# EUROPÄISCHE PATENTSCHRIFT

(11) **EP 4 366 998 B1**
(45) Veröffentlichungstag und Bekanntmachung des Hinweises auf die Patenterteilung: **23.04.2025**
(21) Anmeldenummer: 22744687.9
(22) Anmeldetag: 05.07.2022
(51) Int. Cl.: B60W 60/00, B60W 30/12, B60W 30/16, B60W 50/14

(54) **VERFAHREN ZUM BESTIMMEN EINER HANDS-OFF-ZEIT FÜR EIN AUTOMATISIERTES KRAFTFAHRZEUG**
METHOD FOR DETERMINING A HANDS-OFF TIME FOR AN AUTOMATED MOTOR VEHICLE
PROCÉDÉ DE DÉTERMINATION D'UN TEMPS D'ARRÊT POUR UN VÉHICULE À MOTEUR AUTOMATISÉ

(30) Priorität: 06.07.2021 DE 102021117350
(43) Veröffentlichungstag der Anmeldung: 15.05.2024
(73) Patentinhaber: Bayerische Motoren Werke Aktiengesellschaft, 80809 München (DE)
(72) Erfinder: REUTER, Jakob, 80992 München (DE); NIKOLOV, Ivo, 81245 München (DE); PILZ, Stefan, 85640 Putzbrunn (DE); DOELL, Mathias, 85716 Unterschleißheim (DE); RESCH, Christoph, 94130 Obernzell (DE)
(86) Internationale Anmeldenummer: PCT/EP2022/068541
(87) Internationale Veröffentlichungsnummer: WO 2023/280825

(56) Entgegenhaltungen:
- DE-A1- 102015 207 025
- US-A1- 2021 061 300
- US-A1- 2021 094 583
- US-A1- 2021 146 943

## Beschreibung

Die vorliegende Erfindung betrifft ein Verfahren zum Bestimmen einer Hands-Off-Zeit für ein automatisiertes Kraftfahrzeug und ein Steuergerät, das ausgestaltet ist, das Verfahren auszuführen.

US 2021/0061300 A1 betrifft ein Verfahren und eine Vorrichtung zur Verhinderung eines unbeabsichtigten Spurwechselmanövers in einem mit Fahrassistenzsystemen ausgestatteten Kraftfahrzeug. Bereitgestellt wird dazu ein Sensor zum Erfassen eines Fahrereingriffsniveaus, ein Speicher zum Speichern des Fahrereingriffsniveaus, eine Benutzerschnittstelle zum Bereitstellen eines Benutzeralarms als Reaktion auf ein Alarmsignal, ein Selektor zum Erzeugen einer Anforderung für einen Spurwechselvorgang und ein Prozessor zum Empfangen der Anforderung für den Spurwechselvorgang, zum Vergleichen des Fahrereingriffsniveaus mit einem Schwelleneingriffsniveau und zum Erzeugen des Alarmsignals als Reaktion darauf, dass das Fahrereingriffsniveau niedriger als das Schwelleneingriffsniveau ist.

US 2021/0146943 A1 betrifft ein Fahrzeugsteuersystem mit einem Empfänger, der so konfiguriert ist, dass er eine Betätigung eines Insassen eines Host-Fahrzeugs empfängt, einem Informationsausgeber, der so konfiguriert ist, dass er Informationen ausgibt, einer Steuereinheit für automatisiertes Fahren, die so konfiguriert ist, dass sie automatisiertes Fahren ausführt, um das Host-Fahrzeug zu veranlassen, automatisiert zu fahren, einer Schaltsteuereinheit, die so konfiguriert ist, dass sie einen Fahrmodus des Host-Fahrzeugs auf einen beliebigen aus einer Vielzahl von Fahrmodi umschaltet, einschließlich mindestens eines automatisierten Fahrmodus, in dem die Steuereinheit für automatisiertes Fahren veranlasst wird, das automatisierte Fahren auszuführen, und eines manuellen Fahrmodus, in dem das Host-Fahrzeug veranlasst wird, entsprechend der Betätigung in Bezug auf den Empfänger zu fahren, und eine Ausgabesteuerung, die so konfiguriert ist, dass sie den Informationsausgeber veranlasst, vorbestimmte Informationen auszugeben, wenn der Fahrmodus des Host-Fahrzeugs der automatisierte Fahrmodus ist und eine vorbestimmte Bedingung erfüllt ist, wobei, wenn eine vorbestimmte Operation von dem Empfänger empfangen wurde, die Schaltsteuerung einen Schaltaspekt des Fahrmodus in Abhängigkeit davon bestimmt, ob ein Zeitpunkt, zu dem die vorbestimmte Operation empfangen wurde, nach einem Ausgabestartzeitpunkt der vorbestimmten Informationen liegt.

Aus der DE 10 2018 129 804 A1 ist ein Verfahren zum Bereitstellen einer Information bezüglich einer erforderlichen Aufmerksamkeit eines Fahrers eines Fahrzeuges bekannt. Dieses umfasst eine Auswahl eines erforderlichen Aufmerksamkeitsgrades aus einer Anzahl von möglichen Aufmerksamkeitsgraden, wobei der Aufmerksamkeitsgrad eine erforderliche Aufmerksamkeit des Fahrers zum Führen des Fahrzeuges definiert, ein Ermitteln eines zugehörigen Zeitraums, der beschreibt, wie lange der erforderliche Aufmerksamkeitsgrad erforderlich ist, und ein Bereitstellen eines Signals, welches den erforderlichen Aufmerksamkeitsgrad und den zugehörigen Zeitraum beschreibt.

Aus der DE 10 2014 220 759 A1 ist ein Verfahren zum Überwachen eines Aufmerksamkeitsgrads eines Fahrers eines Fahrzeugs bekannt, wobei eine Zeitdauer basierend auf einer Geschwindigkeit des Fahrzeugs bestimmt wird. Es wird bestimmt, ob eine Lidschlusszeit und/oder eine Lidschließzeit des Fahrers die bestimmte Zeitdauer überschreitet.

Aus der DE 10 2008 056 343 A1 ist ein Warnsystem für ein Kraftfahrzeug bekannt, umfassend Sensormittel zur Erfassung einer Fahrsituation, eine Warneinrichtung zur Ausgabe einer Warnung an einen Fahrer des Kraftfahrzeugs, eine Einrichtung zur Erfassung des Aufmerksamkeitszustands des Fahrers, welche Bedienelemente vorhandener Fahrzeugkomponenten umfasst, und eine Steuereinrichtung, die in Abhängigkeit von Daten der Sensormittel und der Einrichtung zur Erfassung des Aufmerksamkeitszustandes die Warneinrichtung ansteuert. Bei diesem Warnsystem schließt die Einrichtung zur Erfassung des Aufmerksamkeitszustands auf einen verringerten Aufmerksamkeitsgrad des Fahrers, wenn eine Gesamtzeitdauer einer Sequenz von mehreren auf die Bedienelemente bezogenen Bedienhandlungen eine Mindestzeitdauer überschreitet (z.B. Sitzeinstellung). Zusätzlich kann auf einen verringerten Aufmerksamkeitsgrad des Fahrers geschlossen werden, wenn a priori als kognitiv beanspruchend bekannte Bedieneingaben ausgelöst werden (z.B. Telefon).

Nachteil der herkömmlichen Systeme bzw. Verfahren ist, dass die Aufmerksamkeit des Fahrers punktuell bestimmt bzw. berechnet wird, was zu Sprüngen im Aufmerksamkeitsgrad führt.

Weiterhin ist aus dem Stand der Technik ein sog. Lenk- und Spurführungsassistent bekannt. Der Lenk- und Spurführungsassistent ist ausgestaltet, um ein Fahrzeug durch Eingriffe in dessen Querführung im Wesentlichen mittig in einer Fahrspur zu führen. Dafür erfasst ein Kamerasystem eine Spurmarkierung der Fahrspur, an denen das Fahrzeug durch die Eingriffe in die Querführung des Fahrzeugs ausgerichtet wird. Nimmt der Fahrer die Hände vom Lenkrad (Hands-Off) erfolgt nach einer vordefinierten Zeitspanne eine Ausgabe einer Warnung, die den Fahrer auffordert, die Hände zurück an das Lenkrad zu begeben.

Nachteil an solchen herkömmlichen Lenk- und Spurführungsassistenten ist, dass die vordefinierte Zeitspanne unabhängig von einem Aufmerksamkeitsgrad des Fahrers bestimmt wird und es sich insbesondere um eine invariable Zeitdauer handelt.

Vor dem Hintergrund dieses Standes der Technik besteht die Aufgabe der vorliegenden Erfindung darin, eine Vorrichtung und ein Verfahren anzugeben, welche jeweils geeignet sind, zumindest die oben genannten Nachteile des Standes der Technik zu überwinden.

Gelöst wird die Aufgabe durch die Merkmale des unabhängigen Anspruchs. Die Unteransprüche haben bevorzugte Weiterbildungen der Erfindung zum Inhalt.

Danach wird die Aufgabe durch ein Verfahren zum Bestimmen einer Hands-Off-Zeit für ein automatisiertes Kraftfahrzeug gelöst, wobei die Hands-Off-Zeit basierend auf einem Aufmerksamkeitsgrad eines Fahrers des Kraftfahrzeugs über der Zeit bestimmt wird.

Mit anderen Worten, zum Bestimmen eine Zeitspanne bzw. Dauer, während der der Fahrer seine Hände nicht am Lenkrad haben muss (sog. Hands-Off-Zeit), wird der Aufmerksamkeitsgrad des Fahrers nicht nur punktuell bestimmt, sondern vielmehr ein Aufmerksamkeitsgrad des Fahrers aus der Vergangenheit mitberücksichtigt, um so den aktuellen und damit den für die Hands-Off-Zeit ausschlaggebenden Aufmerksamkeitsgrad zu bestimmen.

Das heißt, die (aktuelle) Hands-Off-Zeit wird basierend auf einem Aufmerksamkeitsgradwert bestimmt, der wiederum basierend auf einer aktuellen Aufmerksamkeit des Fahrers und einer Aufmerksamkeit des Fahrers, die vor der Bestimmung der aktuellen Aufmerksamkeit des Fahrers bestimmt wurde, bestimmt wird. Es werden als historische Daten mit einbezogen.

Die Hands-Off-Zeit kann dabei die Zeitspanne sein, für die der Fahrer seine Hände vom Lenkrad nehmen kann, ohne dass eine Warnung ausgegeben wird.

Der Aufmerksamkeitsgrad des Fahrers kann basierend auf visuellen, auditiven und/ oder haptischen Sensordaten bestimmt werden.

Denkbar ist, dass zum Erfassen der visuellen Sensordaten ein auf den Fahrer gerichtete Innenraumkamera vorgesehen ist.

Denkbar ist, dass zum Erfassen der auditiven Sensordaten ein Innenraummikrofon vorgesehen ist, dass Geräusche im Innenraum des Kraftfahrzeugs erfasst.

Denkbar ist, dass zum Erfassen der haptischen Sensordaten eine berührungsempfindliche Sensoranordnung im Kraftfahrzeuginnenraum, insbesondere an einer Lenkvorrichtung und/oder einer weiteren Arm- bzw. Handablage im Kraftfahrzeuginnenraum, angeordnet ist.

Der Aufmerksamkeitsgrad kann basierend auf einem Verhalten des Fahrers bestimmt werden.

Zum Bestimmen des Verhaltens des Fahrers kann ein vordefiniertes positives Verhalten des Fahrers bestimmt werden, das zu einer Erhöhung des Aufmerksamkeitsgrads führt, und ein vordefiniertes negatives Verhalten des Fahrers bestimmt werden, das zu einer Verringerung des Aufmerksamkeitsgrads führt.

Das vordefinierte positive Verhalten und/oder das vordefinierte negative Verhalten des Fahrers kann/können basierend auf einer Müdigkeit des Fahrers und/oder einer Blickrichtung des Fahrers bestimmt werden.

Denkbar ist, dass die Müdigkeit des Fahrers basierend auf einer Lidschlaganalyse, insbesondere auf einer Lidschlusszeit und/oder einer Lidschlaggeschwindigkeit, bestimmt wird.

Das Verhalten des Fahrers kann zeitdiskret und/oder kontinuierlich bestimmt werden.

Ein hoher Aufmerksamkeitsgrad des Fahrers kann zu einer längeren Hands-Off-Zeit als ein niedriger Aufmerksamkeitsgrad des Fahrers führen.

Während einem Ausführen des Verfahrens kann ein Lenk- und Spurführungsassistent aktiviert sein.

Bei dem Lenk- und Spurführungsassistenten kann es sich um ein eingangs beschriebenes Fahrassistenzsystem handeln, welches Eingriffe in eine Querführung des Kraftfahrzeugs vornimmt und dieses dadurch in einer Fahrspur hält und ggf. ein automatisiertes Spurwechseln ermöglicht.

Denkbar ist, dass zusätzlich oder alternativ zum Lenk- und Spurführungsassistent ein Abstandsregeltempomat während der Ausführung des Verfahrens aktiviert ist. Der Abstandsregeltempomat kann ausgestaltet sein, um eine Längsführung des Kraftfahrzeugs zumindest zweitweise und/oder teilweise zu übernehmen, insbesondere so, dass das Kraftfahrzeug einem vorausfahrenden Kraftfahrzeug folgt.

Das oben Beschriebene kann in einer konkreten Ausführung und mit anderen Worten wie nachfolgend beschrieben zusammengefasst werden.

Über eine Kamera im Innenraum des Kraftfahrzeugs wird der Fahrer kontinuierlich beobachtet und basierend auf den von der Kamera erfassten Daten insbesondere punktuell ein aktueller Score-Wert der Aufmerksamkeit des Fahrers berechnet.

Die aktuelle Aufmerksamkeit bzw. der aktuelle Aufmerksamkeitsgrad des Fahrers wird basierend auf diesem aktuellen Score-Wert und den zuvor berechneten Score-Werten ermittelt.

Dabei sind verschiedene Gewichtungen des aktuellen Score-Werts zu den zuvor berechneten Score-Werten denkbar. Insbesondere kann so ein Verlauf des Aufmerksamkeitsgrades über eine gesamte Fahrdauer errechnet werden und dieser erlaubt je nach seiner Höhe kürzere oder längere Hands-Off-Zeiten.

Es wird also sowohl ein positives Verhalten des Fahrers, z.B. wenn eine Aufmerksamkeit des Fahrers dauerhaft vorhanden ist, als auch ein negatives Verhalten des Fahrers, z.B. wenn der Fahrer Systemgrenzen ausreizt und/oder Müdigkeit des Fahrers, erfasst.

Das positive Verhalten ermöglicht längere Hands-off Zeiten und wird belohnt. Das negative Verhalten verringert die Hands-Off-Zeit und wird bestraft.

Ferner wird ein Steuergerät für ein Kraftfahrzeug bereitgestellt, wobei das Steuergerät ausgestaltet ist, das oben beschriebene Verfahren auszuführen.

Denkbar ist, zusätzlich oder alternativ, dass ein Kraftfahrzeug, aufweisend das Steuergerät bereitgestellt wird. Bei dem Kraftfahrzeug kann es sich um ein Automobil handeln.

Das oben mit Bezug zum Verfahren Beschriebene gilt analog auch für das Steuergerät sowie das Kraftfahrzeug und umgekehrt.

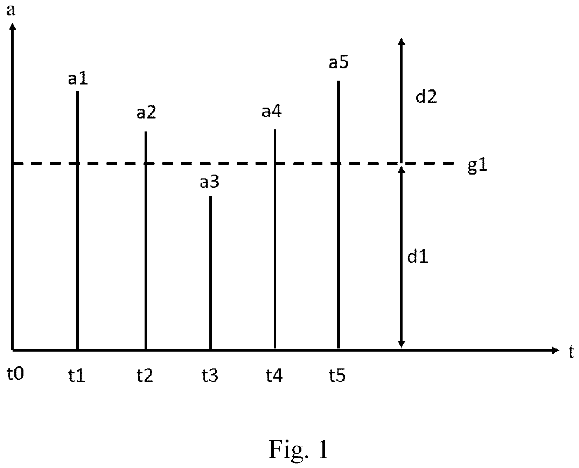

Nachfolgend wird eine Ausführungsform mit Bezug zu Figur 1 beschrieben.
- Fig. 1: zeigt schematisch einen mit dem Verfahren zum Bestimmen einer Hands-Off-Zeit bestimmten Verlauf eines Aufmerksamkeitsgrad eines Fahrers des Kraftfahrzeugs über der Zeit.

In Figur 1 ist ein Diagramm dargestellt, auf dessen horizontaler Achse die Zeit t und auf der vertikalen Achse der Aufmerksamkeitsgrad a aufgetragen ist.

Beispielhaft sind in Figur 1 fünf mit dem erfindungsgemäßen Verfahren zum Bestimmen der Hands-Off-Zeit für ein automatisiertes Kraftfahrzeug bestimmte Aufmerksamkeitsgradwerte a1 - a5, die zu den Zeitpunkten t1 - t5 bestimmt wurden, aufgetragen.

Der Aufmerksamkeitsgrad a wird demnach zeitdiskret bestimmt und durch die Aufmerksamkeitsgradwerte a1 - a5 repräsentiert, wobei zusätzlich oder alternativ auch eine kontinuierliche Bestimmung des Aufmerksamkeitsgrads a denkbar ist.

Weiterhin ist in Figur 1 ein Grenzwert g1 des Aufmerksamkeitsgrads a dargestellt, wobei die Hands-Off-Zeit eine erste Dauer bzw. Zeitspanne d1 beträgt, wenn der Aufmerksamkeitsgrad a unter dem Grenzwert g1 liegt, und die Hands-Off-Zeit eine zweite Dauer bzw. Zeitspanne d2 beträgt, wenn der Aufmerksamkeitsgrad a gleich dem Grenzwerts g1 ist oder über dem Grenzwert g1 liegt.

Die erste Zeitspanne d1 ist kürzer als die zweite Zeitspanne d2, d.h. ein hoher Aufmerksamkeitsgrad a des Fahrers führt zu einer längeren Hands-Off-Zeit als ein niedriger Aufmerksamkeitsgrad a des Fahrers.

Die Zeitleiste t beginnt zum Zeitpunkt t0, bei dem eine Fahrt mit dem automatisierten Kraftfahrzeug begonnen wird, wobei zum Zeitpunkt der Ausführung des Verfahrens ein Lenk- und Spurführungsassistent des Kraftfahrzeugs aktiviert ist.

Das Verfahren wird von einem im Kraftfahrzeug verbauten Steuergerät ausgeführt, das ausgestaltet ist, eine Warnung, insbesondere auditiv, taktil und/oder visuell, an den Fahrer auszugeben, wenn die erste bzw. die zweite Zeitspanne d1, d2, d.h. die bestimmte Hands-Off-Zeit, überschritten ist.

Dem Verfahren liegt die Idee zugrunde, dass die Hands-Off-Zeit basierend auf dem Aufmerksamkeitsgrad a des Fahrers des Kraftfahrzeugs über der Zeit t bestimmt wird, d.h. dass zur Bestimmung eines aktuellen Aufmerksamkeitsgradwertes a1 - a5 zumindest der Aufmerksamkeitsgradwert a1 - a5 der vorherigen Bestimmung berücksichtigt wird.

Vorliegend wird zur Bestimmung des Aufmerksamkeitsgradwertes a1 - a5 zum jeweiligen Bestimmungszeitpunkt t1 - t5 ein Score-Wert der Aufmerksamkeit des Fahrers bestimmt.

Dieser Score-Wert wird basierend auf dem Verhalten des Fahrers zum jeweiligen Zeitpunkt t1 - t5 bestimmt, wobei dazu das Verhalten des Fahrers visuell mittels einer Innenraumkamera erfasst wird.

Denkbar wäre auch, das Verhalten zusätzlich oder alternativ basierend auf auditiven und/ oder haptischen Sensordaten zu bestimmen.

Dazu wird mittels der Bilddaten der Kamera eine Bewegung des Fahrers, insbesondere eine Kopf- und/oder Augenbewegung zum Bestimmen einer Blickrichtung des Fahrers und/oder ein Lidschlag zur Bestimmung einer Müdigkeit des Fahrers, analysiert.

Dabei wird zwischen einem vordefinierten positiven Verhalten des Fahrers, das zu einer Erhöhung des Score-Werts der Aufmerksamkeit führt, und einem vordefinierten negativen Verhalten des Fahrers, das zu einer Verringerung des Score-Werts der Aufmerksamkeit a führt, unterschieden.

Beispielsweise führt eine vom Fahrgeschehen abgewandte Blickrichtung des Fahrers und/oder eine einen vorbestimmten bzw. vordefinierten Müdigkeitsgrenzwert überschreitende Müdigkeit jeweils als vordefiniertes negatives Verhalten zu einem niedrigen Score-Wert der Aufmerksamkeit zum jeweiligen Bestimmungszeitpunkt t1 - t5, wohingegen eine zum Fahrgeschehen gewandte Blickrichtung des Fahrers und/oder eine einen vorbestimmten bzw. vordefinierten Müdigkeitsgrenzwert unterschreitende Müdigkeit jeweils als vordefiniertes positives Verhalten zu einem höheren Score-Wert der Aufmerksamkeit zum jeweiligen Bestimmungszeitpunkt t1 - t5 führt/führen.

Der zum jeweiligen Bestimmungszeitpunkt t1-t5 bestimmte Score-Wert der Aufmerksamkeit a ergibt jedoch nicht alleine den jeweiligen Aufmerksamkeitsgradwert a1 - a5, der letztlich die Dauer d1, d2 der Hands-Off-Zeit festlegt.

Vielmehr wird zum Zeitpunkt t2 der zum Zeitpunkt t1 ermittelte Score-Wert der Aufmerksamkeit bei der Bestimmung des Aufmerksamkeitsgradwertes a2, der dem aktuellen Aufmerksamkeitsgrad a zum Zeitpunkt t2 entspricht, berücksichtigt.

Gleiches gilt für die Bestimmung des Aufmerksamkeitsgradwertes a3 zum Zeitpunkt t3, bei dem der zum Zeitpunkt t1 ermittelte Score-Wert der Aufmerksamkeit und/oder der zum Zeitpunkt t2 ermittelte Score-Wert der Aufmerksamkeit zur Bestimmung berücksichtigt werden.

Denkbar ist, dass weiter zurückliegende Score-Werte, hier der Score-Wert zum Zeitpunkt t1, bei der Bestimmung des aktuellen Score-Wertes geringer gewichtet werden als kürzlich bestimmte Score-Werte, hier der Score-Wert zum Zeitpunkt t2. Die Score-Werte zu den Zeitpunkten t4 und t5 werden auf dieselbe Weise bestimmt.

Dadurch können starke Sprünge in den Aufmerksamkeitsgradwerten a1 - a5 vermieden werden, wie Figur1 zu entnehmen ist. Trotz abnehmendem Score-Wert vom Zeitpunkt t1 zum Zeitpunkt t2 fällt der Aufmerksamkeitsgrad a nicht direkt zum Zeitpunkt t2 unterhalb den Grenzwert g1, sondern erst zum Zeitpunkt t3 und erhöht sich dann wieder bis zum Zeitpunkt t5.

Damit kann ein positives Verhalten des Fahrers aus der Vergangenheit berücksichtigt und mit einer längeren Hands-Off-Zeit honoriert werden, selbst wenn der Score-Wert der Aufmerksamkeit bei einem Bestimmungszeitpunkt t1 - t5, beispielswiese zufällig, eine solche längere Hands-Off-Zeit nicht rechtfertigt und umgekehrt.

### Bezugszeichenliste

- a: Aufmerksamkeitsgrad
- a1 - a5: Aufmerksamkeitsgradwerte
- d1: kürzere Dauer der Hands-Off-Zeit
- d2: längere Dauer der Hands-Off-Zeit
- g1: Grenzwert
- t: Zeit
- t1 - t5: Bestimmungszeitpunkte des Aufmerksamkeitsgrads

## Patentansprüche

1. Verfahren zum Bestimmen einer Hands-Off-Zeit für ein automatisiertes Kraftfahrzeug, **dadurch gekennzeichnet, dass** die Hands-Off-Zeit basierend auf einem Aufmerksamkeitsgrad (a) eines Fahrers des Kraftfahrzeugs über der Zeit (t) bestimmt wird.

2. Verfahren nach Anspruch 1, **dadurch gekennzeichnet, dass** der Aufmerksamkeitsgrad (a) des Fahrers basierend auf visuellen, auditiven und/oder haptischen Sensordaten bestimmt wird.

3. Verfahren nach Anspruch 1 oder 2, **dadurch gekennzeichnet, dass** der Aufmerksamkeitsgrad (a) des Fahrers basierend auf einem Verhalten des Fahrers bestimmt wird.

4. Verfahren nach Anspruch 3, **dadurch gekennzeichnet, dass** zum Bestimmen des Verhaltens des Fahrers ein vordefiniertes positives Verhalten des Fahrers bestimmt wird, das zu einer Erhöhung des Aufmerksamkeitsgrads (a) führt, und ein vordefiniertes negatives Verhalten des Fahrers bestimmt wird, das zu einer Verringerung des Aufmerksamkeitsgrads (a) führt.

5. Verfahren nach Anspruch 4, **dadurch gekennzeichnet, dass** das vordefinierte positive Verhalten und/oder das vordefinierte negative Verhalten des Fahrers basierend auf einer Müdigkeit des Fahrers und/oder einer Blickrichtung des Fahrers bestimmt wird/werden.

6. Verfahren nach Anspruch 5, **dadurch gekennzeichnet, dass** die Müdigkeit des Fahrers basierend auf einer Lidschlaganalyse bestimmt wird.

7. Verfahren nach einem der Ansprüche 3 bis 6, **dadurch gekennzeichnet, dass** das Verhalten des Fahrers zeitdiskret und/oder kontinuierlich bestimmt wird.

8. Verfahren nach einem der Ansprüche 1 bis 7, **dadurch gekennzeichnet, dass** ein hoher Aufmerksamkeitsgrad (a) des Fahrers zu einer längeren Hands-Off-Zeit als ein niedriger Aufmerksamkeitsgrad (a) des Fahrers führt.

9. Verfahren nach einem der Ansprüche 1 bis 8, **dadurch gekennzeichnet, dass** während einem Ausführen des Verfahrens ein Lenk- und Spurführungsassistent aktiviert ist.

10. Steuergerät für ein Kraftfahrzeug, **dadurch gekennzeichnet, dass** das Steuergerät ausgestaltet ist, das Verfahren nach einem der Ansprüche 1 bis 9 auszuführen.

## Claims

1. Method for determining a hands-off time for an automated motor vehicle, **characterized in that** the hands-off time is determined on the basis of an alertness level (a) of a driver of the motor vehicle over time (t).

2. Method according to Claim 1, **characterized in that** the alertness level (a) of the driver is determined on the basis of visual, auditive, and/or haptic sensor data.

3. Method according to Claim 1 or 2, **characterized in that** the alertness level (a) of the driver is determined on the basis of a behavior of the driver.

4. Method according to Claim 3, **characterized in that** the behavior of the driver is determined by determining a predefined positive behavior of the driver that leads to an increase in alertness level (a), and by determining a predefined negative behavior of the driver that leads to a decrease in alertness level (a).

5. Method according to Claim 4, **characterized in that** the predefined positive behavior and/or the predefined negative behavior of the driver is/are determined on the basis of a tiredness of the driver and/or a line of vision of the driver.

6. Method according to Claim 5, **characterized in that** the tiredness of the driver is determined on the basis of a blink analysis.

7. Method according to one of Claims 3 to 6, **characterized in that** the behavior of the driver is determined at discrete times and/or continuously.

8. Method according to one of Claims 1 to 7, **characterized in that** a high alertness level (a) of the driver leads to a longer hands-off time than a low alertness level (a) of the driver.

9. Method according to one of Claims 1 to 8, **characterized in that** a steering and lane control assist system is activated while the method is carried out.

10. Control unit for a motor vehicle, **characterized in that** the control unit is designed to carry out the method according to one of Claims 1 to 9.

## Revendications

1. Procédé de détermination d'un temps en mode Hands-Off pour un véhicule automobile automatisé, **caractérisé en ce que** le temps en mode Hands-Off est déterminé sur la base d'un niveau d'attention (a) d'un conducteur du véhicule automobile au cours du temps (t).

2. Procédé selon la revendication 1, **caractérisé en ce que** le niveau d'attention (a) du conducteur est déterminé sur la base de données de capteurs visuels, auditifs et/ou haptiques.

3. Procédé selon la revendication 1 ou 2, **caractérisé en ce que** le niveau d'attention (a) du conducteur est déterminé sur la base d'un comportement du conducteur.

4. Procédé selon la revendication 3, **caractérisé en ce que**, pour déterminer le comportement du conducteur, un comportement positif prédéfini du conducteur est déterminé qui conduit à une augmentation du niveau d'attention (a), et un comportement négatif prédéfini du conducteur est déterminé qui conduit à une diminution du niveau d'attention (a).

5. Procédé selon la revendication 4, **caractérisé en ce que** le comportement positif prédéfini et/ou le comportement négatif prédéfini du conducteur sont déterminés sur la base d'une fatigue du conducteur et/ou d'une direction du regard du conducteur.

6. Procédé selon la revendication 5, **caractérisé en ce que** la fatigue du conducteur est déterminée sur la base d'une analyse des clignements d'yeux.

7. Procédé selon l'une des revendications 3 à 6, **caractérisé en ce que** le comportement du conducteur est déterminé de manière discrète et/ou continue.

8. Procédé selon l'une des revendications 1 à 7, **caractérisé en ce qu'**un niveau d'attention (a) élevé du conducteur conduit à un temps en mode Hands-Off plus long qu'un niveau d'attention (a) faible du conducteur.

9. Procédé selon l'une des revendications 1 à 8, **caractérisé en ce qu'**un assistant de direction et de guidage de voie est activé pendant la mise en œuvre du procédé.

10. Dispositif de commande de véhicule automobile, **caractérisé en ce que** le dispositif de commande est conçu pour mettre en œuvre le procédé selon l'une des revendications 1 à 9.
